# EUROPEAN PATENT APPLICATION

(11) **EP 4 730 305 A1**
(43) Date of publication of application: **22.04.2026**
(21) Application number: 24207647.9
(22) Date of filing: 18.10.2024
(51) Int. Cl.: G09B 29/00, G01C 21/00

(54) **METHOD, APPARATUS AND COMPUTER PROGRAM FOR GENERATING MAP DATA**

(71) Applicant: TomTom Global Content B.V., 1011 AC Amsterdam (NL)
(72) Inventor: GERARDI, Jochen, 1011 AC Amsterdam (NL); KOROLCZUK, Adam, 1011 AC Amsterdam (NL)
(74) Representative: Swindell & Pearson Limited

(57) **Abstract**

Certain examples provide a computer-implemented method (100) of generating sectioned map data (401), the method comprising an apparatus (10) performing the following: obtaining (21) map data (201) of a digital map, wherein the map data comprises: segment data (202) indicative of one or more segments (203) of one or more linear map features (204) of the digital map, and segment attribute data (205) indicative of: one or more attributes (206) associated with each segment, wherein the one or more attributes are selected from a first set of attributes (207), and at least one position (208) of each attribute within its respective segment, wherein the at least one position of each attribute within its respective segment is defined via linear referencing, and; obtaining (22) sectioning configuration data (301) for configuring sectioning of the map data, wherein the sectioning configuration data comprises an indication of a second set of attributes (307), wherein the second set of attributes is a subset of the first set of attributes, and wherein the sectioning configuration data enables sectioning of the map data to be performed based at least in part on the second set of attributes; and generating (23) sectioned map data (401), wherein the generation of the sectioned map data comprises sectioning the map data in accordance with the sectioning configuration data.

## Description

### TECHNOLOGICAL FIELD

Examples of the present disclosure relate to map data; in particular a method, an apparatus and a computer program for generating map data, namely sectioned map data. Some examples, though without prejudice to the foregoing, relate to selectively configurable sectioning of map data, based on linearly referenced attributes, to generate customisably sectioned map data.

### BACKGROUND

In a digital map, features of a map (such as linear map features, not least for instance segments of a road or a road network) may be represented via a graph (e.g. a directed graph) comprising nodes and arcs (which may also be referred to as edges, lines or ways).

A digital map may comprise map data as a mesh of data layers. A physical geometry and topology of a road network may be represented by a primary layer of a digital map. For instance, a road segment (i.e. a stretch of road between two road junctions) can be represented/defined in the primary layer by two nodes and an arc therebetween. The primary layer may serve as a base layer for other layers/map data of the digital map. For instance, the primary layer may serve as a reference layer that can be used by (downstream) producers of map content/higher layer map data (e.g. producers of Value Add(ed) Data, VAD for a VAD layer of a digital map) that can be stored on top of the primary layer. The higher layers may comprise attributes and associations of the attributes to particular map features (such map features themselves being defined/represented in the reference/base layer). The reference/base layer is immutable to producers of higher layer map data/map content to ensure stability of the reference/base layer

A map feature, not least such as a road segment, may have several attributes associated therewith. For instance, a road segment may have attributes including not least for example one or more of: road surface type, speed limit, other speed information, number of lanes, presence of a barrier on the road segment, presence of a bridge on the road segment, presence of a tunnel, access restrictions, height restrictions, turn restrictions, vehicle type restrictions, lane type, curvature, gradient, lane divider type, presence of an emergency lane and/or carpool lane and/or bus lane and/or taxi lane, exit number, toll information, road name, routing class and/or other routing information. Data representative of attributes of map features may be produced, provided and stored as a (higher) layer of a digital map, and may also be provided separately of the underlying reference/base layer (not least such as in map attribute updates).

There are generally two ways of storing attributes in a map. The first is by having a so-called "sectioned" map, in which arcs are selected such that the value of all attributes is constant along the length of the arc. This means that any change in an attribute goes along with a change of arc. Alternately, it has been proposed to use what is referred to as "linear referencing", wherein attributes are associated not just with an arc, but also with a certain position along the arc, expressed in terms of a distance (or distances) from the start of the arc. While the linear referencing approach has various advantageous, it has not been widely adopted because most systems have been built to interface with a sectioned map.

Various examples of the present disclosure seek to address such issues.

It is useful to provide an improved method, apparatus and computer program for the generation of map data. In some circumstances it can be desirable to improve the generation of map data. In some circumstances it can be desirable to generate sectioned map data wherein the sectioning is based on linearly referenced attributes. In some circumstances it can be desirable to generate customisably sectioned map data via selectively configurable sectioning.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The scope of protection sought for various embodiments of the invention is set out by the claims.

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to various, but not necessarily all, examples of the disclosure there is provided a method comprising:
obtaining map data of a digital map, wherein the map data comprises:
   segment data indicative of one or more segments of one or more linear map features of the digital map, and
   segment attribute data indicative of:
      one or more attributes associated with each segment, wherein the one or more attributes are selected from a first set of attributes, and
      at least one position of each attribute within its respective segment, wherein the at least one position of each attribute within its respective segment is defined via linear referencing, and;
obtaining sectioning configuration data for configuring sectioning of the map data, wherein the sectioning configuration data comprises an indication of a second set of attributes, wherein the second set of attributes is a subset of the first set of attributes, and wherein the sectioning configuration data enables sectioning of the map data to be performed based at least in part on the second set of attributes; and
generating sectioned map data, wherein the generation of the sectioned map data comprises sectioning the map data in accordance with the sectioning configuration data.

According to at least some examples of the disclosure there is provided an apparatus comprising means for performing the above-mentioned method.

According to various, but not necessarily all, examples of the disclosure there is provided a module, chipset, circuitry, device, data processing apparatus and/or system comprising means for performing the above-mentioned method.

According to various, but not necessarily all, examples of the disclosure there is provided a computer program comprising instructions, which when executed by an apparatus, cause the apparatus to perform the above-mentioned method.

According to various, but not necessarily all, examples of the disclosure there is provided an apparatus comprising:
at least one processor; and
at least one memory storing instructions that, when executed by the at least one processor, cause the apparatus at least to perform the above-mentioned method.

According to various, but not necessarily all, examples of the disclosure there is provided a non-transitory computer readable medium encoded with instructions that, when executed by at least one processor, causes the above-mentioned method to be performed.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, the digital map comprises at least one of the following:
a base digital map;
a reference digital map;
an immutable digital map;
an unsectioned digital map; or
a digital map that has undergone a first stage sectioning procedure.

In some but not necessarily all examples, the segment data comprises a representation of at least one of the following:
a physical geometry of at least a part of one or more linear map features;
a physical topology of at least a part of one or more linear map features;
one or more segments of one or more navigable elements of a network of navigable elements; and
a primary layer of the digital map.

In some but not necessarily all examples, the segment data comprises a representation of the one or more segments of the one or more linear map features of the digital map, and wherein the representation is defined via a plurality of nodes and arcs.

In some but not necessarily all examples, the one or more linear map features comprises at least one of the following:
one or more navigable elements;
one or more roads; and
one or more boundary lines of one or more geographic areas.

In some but not necessarily all examples, the least one position of each attribute within its respective segment, comprises at least one of the following:
an indication of a position along the respective segment where the attribute is located;
an indication of a position along the respective segment where the attribute starts to apply;
an indication of a position along the respective segment where the attribute ceases to apply;
an indication of a position along the respective segment where the attribute changes; and
an indication of a portion of the respective segment where the attribute applies.

In some but not necessarily all examples, each attribute of the second set of attributes is associated with an attribute category, and wherein sectioning the map data in accordance with the sectioning configuration data comprises sectioning at least one segment of the map data to generate two or more segments of the sectioned map data wherein each of the two or more segments of the sectioned map data is associated with a single attribute per attribute category over its length.

In some but not necessarily all examples, sectioning the map data in accordance with the sectioning configuration data comprises:
determining at least one segment that is associated with at least one attribute of the second set of attributes;
determining at least one position, within the determined at least one segment, of the at least one attribute of the second set of attributes; and
sectioning the map data based at least in part on:
   the determined at least one segment, and
   the determined at least one position.

In some but not necessarily all examples, each segment is defined in the segment data of the map data by an arc between two nodes, and wherein sectioning the map data comprises at least one of the following:
splitting, at at least one split point, at least one arc of the determined at least one segment to form at least two split arcs, wherein the at least one position of the at least one split point is based at least in part on the determined at least one position; and
inserting, at at least one insertion point, at least one node between two nodes of the determined at least one segment, wherein the at least one position of the at least one insertion point is based at least in part on the determined at least one position.

In some but not necessarily all examples, the method further comprises at least one of the following:
assigning, to at least one of the split arcs, the respective at least one attribute of the second set of attributes;
assigning, to the at least one inserted node, the respective at least one attribute of the second set of attributes.

In some but not necessarily all examples, the method further comprises:
determining whether a position of at least one attribute of the second set of attributes is within a threshold separation distance of a position of at least one other attribute of the second set of attributes; and
performing a normalisation procedure based at least in part on the determination.

In some but not necessarily all examples, the normalisation procedure comprises at least one of:
generating an adjusted position of a position of one or more of the at least one attribute and the at least one other attribute;
assigning an adjusted position to one or more of the at least one attribute and the at least one other attribute;
assigning the at least one attribute an adjusted position that correspond to the position of the at least one other attribute; and
assigning an adjusted position to each of the at least one attribute and the at least one other attribute, wherein the adjusted position is based at least in part on the position of the at least one attribute and the position of the at least one other attribute.

In some but not necessarily all examples, at least one of:
sectioning the map data is based at least in part on the adjusted position;
a segment of the map data is split at a split point, wherein the position of the split point is based at least in part on the adjusted position; and
a node is inserted between two nodes of a segment of the map data at an insertion point, wherein a position of the insertion point is based at least in part on the adjusted position.

In some but not necessarily all examples, the method further comprises:
determining, based at least in part on the map data and the sectioning configuration data, a third set of attributes, wherein attributes of the third set of attributes are:
   in the first set of attributes, and
   not in the second sets of attributes; and
generating segment attribute data for the sectioned map data, wherein the segment attribute data for the sectioned map data:
   is indicative of attributes of the third set of attributes that are associated with one or more segments of the sectioned map data, and
   at least one position of each attribute of the third set of attributes within its respective segment of the sectioned map data, wherein the at least one position of each attribute within its respective segment is defined via linear referencing.

In some but not necessarily all examples, the method further comprises:
determining the at least one position of each attribute within its respective segment of the sectioned map data based at least in part on the at least one position of each attribute of the third set of attributes within its respective segment of the segment data of the map data.

In some but not necessarily all examples, the segment attribute data of the map data is indicative of at least one variable value of at least one attribute whose value varies based at least in part on a position within its associated segment of the segment data of the map data, and wherein the method further comprises:
determining, at least one adjusted variable value of the at least one attribute based at least in part on a position within its associated segment of the sectioned map data.

In some but not necessarily all examples:
the map data of a digital map further comprises segment relation data indicative of at least one relation between:
   one of the one or more segments of the segment data, and
   at least one other of the segments of the segment data;
the sectioned map data comprises segment relation data indicative of:
   at least one relation between one of the one or more segments of the sectioned map data, and
   at least one other of the segments of the sectioned map data; and
the segment relation data of the sectioned map data is based at least in part on the segment relation data of the map data.

In some but not necessarily all examples, at least one segment of the map data has at least one relation with at least one other segment of the map data, wherein sectioning the map data comprises splitting the at least one segment into a set of two or more split segments, and wherein the method further comprises at least one of:
assigning the at least one relation to a first subset of the set of split segments;
assigning a null relation to a second subset of the set of split segments, wherein the second subset is different to the first subset; and
determining a relation to assign to at least one split segment of the set of split segments based at least in part on the at least one relation and a condition associated with the at least one relation.

In some but not necessarily all examples, the map data of a digital map further comprises segment identification data indicative of an identifier for each of the one or more segments of the segment data, and wherein the sectioned map data comprises segment identification data indicative of an identifier for each of the one or more segments of the sectioned map data, and wherein the segment identification data of the sectioned map data is based at least in part on the segment identification data of the map data.

In some but not necessarily all examples, each segment and/or each node of the map data has an identifier, and wherein the method further comprises at least one of:
for each segment of the map data that has been split in the sectioned map data, generating and assigning an identifier for each split segment;
for each segment of the sectioned map data that has not been split, using the same identifier as used in the map data;
for each node of the sectioned map data that corresponds to a node of the map data, using the same identifier as used in the map data; and
for each node of the sectioned map data that has been inserted between two nodes of the map data, generating and assigning an identifier for each inserted node.

In some but not necessarily all examples, the method further comprises:
sectioning the map data comprises splitting a first segment of the map data into two or more split segments, wherein the first segment of the map data has a first identifier, wherein a second identifier for each split segment is generated based at least in part on the first identifier.

In some but not necessarily all examples, the method further comprises generating a mapping between:
the first identifier, and
the identifier for each split segment.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
Fig. 1 schematically shows an example of map data representative of a road segment and attributes associated with the road segment;
Fig. 2 schematically shows an example of a method of generating sectioned map data;
Fig. 3 schematically shows an example of segment attribute data;
Fig. 4 schematically shows an example of sectioned map data based on sectioning of the map data of Fig. 1;
Fig. 5 schematically shows a further example of map data representative of a road segment and attributes associated with the road segment;
Fig. 6 schematically shows an example of sectioned map data based on sectioning of the map data of Fig. 5;
Figs. 7 to 9 schematically shows sectioning of map data based on plural attributes;
Fig. 10 schematically shows another example of map data;
Fig. 11 schematically shows an example of sectioned map data representative of the road segment of Fig. 10 and attributes associated with the sections of the road segment;
Figs. 12, 13A and 13B schematically show a process of normalising linear referenced attributes;
Fig 14 schematically shows map data and sectioned map data;
Fig. 15 schematically shows a further example of sectioning map data;
Fig. 16 schematically shows an example of an apparatus; and
Fig. 17 schematically shows an example of a computer program.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the drawings (and description) a similar feature may be referenced by the same three-digit number. In the drawings (and description), an optional subscript to the three-digit number can be used to differentiate different instances of similar features. Therefore, a three-digit number without a subscript can be used as a generic reference and the three-digit number with a subscript can be used as a specific reference. A subscript can comprise a single digit that labels different instances. A subscript can comprise two digits including a first digit that labels a group of instances and a second digit that labels different instances in the group.

### DETAILED DESCRIPTION

Typically, conventional digital maps are sectioned maps, which are sectioned ab initio (i.e. the sectioned digital map is initially sectioned/sectioned from the outset). Such sectioned maps are typically used industry wide.

In a sectioned map, a representation of a road (e.g. a road segment between two junctions) is sectioned/segmented/split, from the beginning, into arcs (via an insertion of a new node between the two nodes defining the arc) based on all of the plurality of attributes associated with the road. In this regard, the road is sectioned, ab initio, into arcs such that, for each arc, each value of each of the plurality of attributes is constant along the length of the arc. An attribute may then be associated with an entire length of an arc. In a sectioned map, it is not possible for an attribute value to change part way along an arc. Accordingly, each time an attribute changes, a new arc would need to be created in the sectioned map. For example, if a new speed limit were to be introduced part way along a road segment, this would mean that an attribute/speed limit for an arc representing the road segment in a sectioned map newly changes part way along the length of the arc. In order to update the sectioned map, such a change in attribute of the arc would require splitting the ("parent") arc into split ("child") arcs via the introduction of a new node between the two nodes that defined the parent arc. In this regard, a further sectioning procedure occurs on the (already) sectioned map. The new attribute/speed limit would then need to be assigned/associated to the one of the new child arcs (also all the other attributes that were associated with the parent arc would need to be assigned/associated to the child arcs).

Also, since each arc would have its own unique ID, every time an arc is sectioned/split on an attribute change, an ID for the arc is removed from the sectioned map and the new split arcs get added each having its own new unique ID. Such changing of IDs when updating sectioned maps can make updated sectioned maps unreliable and may also create extra work for developers and map content creators to account for such continual changes.

Furthermore, sectioned maps can lead to vast numbers of small arcs, excess data and can also adversely impact performance of products or services built on/using the map - not least such as routing algorithms (whose performance may be decreased due to having to compute large numbers of changes in data between arcs to establish a shortest, fastest or most economical route). Such issues may become increasingly pronounced as sectioned maps get more complicated and the attributes more numerous.

As an alternative to sectioned maps (i.e. ab initio sectioned maps) it has been proposed to use linearly referenced maps. In a linearly referenced map, a road segment is not split up based on attribute changes, but instead attributes are represented based on their distance along the road segment (or more precisely a distance along an arc representing the road segment). For example, if a new speed limit for a road segment were to be introduced part way along the road segment, in a linearly referenced map, rather than needing to split the arc, create two new split/child arcs and two new IDs for the same, instead a new linearly referenced attribute can be provided which defines the attribute and a distance along the arc where the speed limit changes. Advantageously, this may greatly reduce the number of arcs required and IDs for the same. This may help make a linearly referenced map more stable, consistent, scalable than a conventional sectioned map as well as easier for developers and map content creators to work with and update.

However, while the linear referencing approach may have various advantageous over conventional sectioned maps, linear referencing has not been widely adopted. This is partly because map users, map developers and content creators may have systems that are built on/based around sectioned maps (e.g. may require a sectioned map as an input - such as their own pre-existing sectioned digital maps) - which linearly referenced maps may not be compatible with or which may not be able to be readily interfaced/integrated with.

There now follows a brief discussion of linearly referenced digital maps.

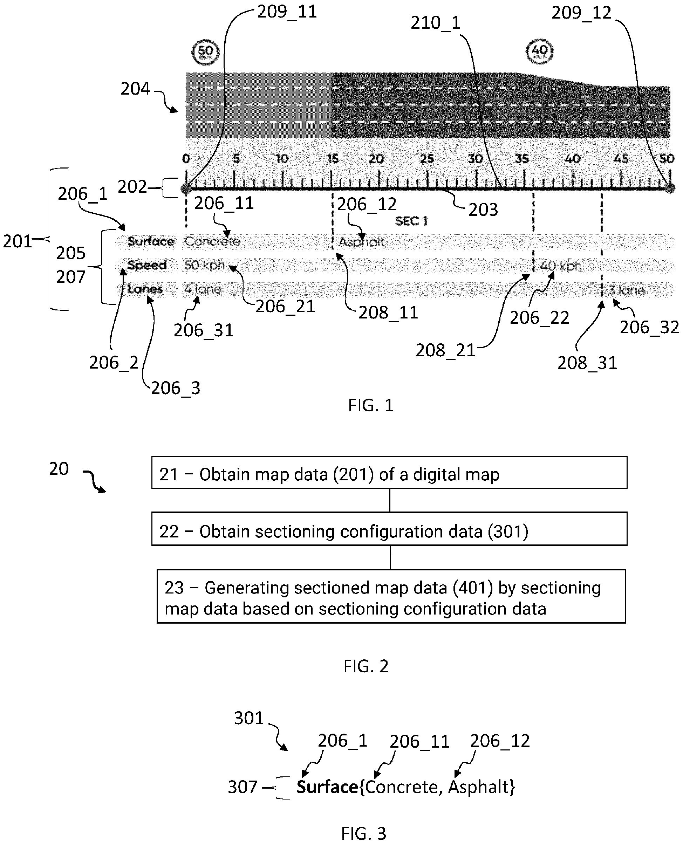

Fig. 1 schematically illustrates an example of map data 201 of a linearly referenced digital map, along with a schematic illustration of a road segment 204 and attributes 206 (e.g. road surface type, speed limit and number of lanes) of the road segment that the map data represents.

The digital map comprises map data representative of segments of navigable elements of a network of navigable elements in a geographical region. The digital map represents segments of navigable elements via a graph comprising arcs and nodes. In this regard, each segment of a navigable element is defined by an arc (which may also be referred as a way, edge, link or line) between two nodes.

The digital map may comprise one or more of the following:
a base digital map;
a reference digital map;
an immutable digital map (i.e. which users of the digital map and producers of higher layer map data are not permitted to change);
an unsectioned/unfragmented digital map; or
a digital map that has undergone a first stage sectioning procedure.

The map data 201 comprises segment data 202 indicative of one or more segments 203 of one or more linear map features 204 of the digital map.

In the simplified schematic example of Fig. 1, the map data 201 is merely representative of a single segment 203 of a road 204 (i.e. a segment of a road between two junctions or decision points). However, it is to be appreciated that in other examples, the map data can be representative of plural road segments of plural roads. In the linearly referenced digital map of Fig. 1, an initial segmentation has been applied, namely segmenting a portion of a road into a road segment based on the positions of the two junctions that define the road segment.

In the following description, linear map features will be referred to as road segments. However, it is to be appreciated that the linear map feature could be any map feature consisting of or predominantly formed using lines (which need not necessarily be straight lines but could be curved lines) not least for example: other types of navigable elements of a network of navigable elements (e.g. such as: foot paths, hiking trails, cycle paths, canals, tow paths, rivers, railway lines, or the like), boundary lines, or lines delineating an area/zone/geographic region.

The segment data 202 may represent of at least one of the following:
a physical geometry of the road segment,
a physical topology of the road segment, and
a primary layer of the digital map,
which may be represented via a graph. In this regard, the segment data may represent/define a 50m (or 5,000cm) long road segment via a first node 209_11 and a second node 209_12 and an arc 210_1 (representative of a length of 50m) between the first and second nodes.

The map data 201 also comprises segment attribute data 205 (e.g. for a VAD layer or an attribute layer of the digital map) which is indicative of:
a first set 207 of attributes 206 associated with the road segment, and
a position 208 of each attribute within the road segment.

The position of an attribute within its respective road segment may comprises at least one of the following:
an indication of a position along the road segment where the attribute is located (i.e. a point-like position);
an indication of a position along the road segment where the attribute starts to apply;
an indication of a position along the road segment where the attribute ceases to apply;
an indication of a position along the road segment where the attribute changes; and an indication of a portion (e.g. extended length/range) of the road segment where the attribute applies.

In the example of Fig. 1, the road segment is associated with three types/categories of attributes: road surface 206_1, speed limit 206_2 and number of lanes 206_3. Each type/category of attribute has its owns set of attributes, for instance:

| | |
|---|---|
| road surface 206_1: | Concrete 206_11 or Asphalt 206_12 |
| speed limit 206_2: | 50 km/h 206_21 or 40 km/h 206_22 |
| number of lanes 206_3: | 4 lanes 206_31 or 3 lanes 206_32 |

In the example of Fig. 1, the segment attribute data 205 provides an indication of the following positions of each attribute:
road surface: Concrete up until position 208_11 (at 15m) then Asphalt for the remainder of the road segment thereafter;
speed limit: 50 km/hr up until position 208_21 (at 36m) then 40 km/hr thereafter;
number of lanes: 4 lanes up until position 208_31 (at 43m) then 3 lanes thereafter.

There now follows a further discussion of a sectioned digital map - such as are typically used industry wide, i.e. a conventional digital map that is sectioned ab initio (in this regard the sectioned digital map is initially sectioned/sectioned from the outset).

In a sectioned map, a linear map feature, such as a road segment, may be split into two or more sections. This may be done by splitting an arc that represents/defines the linear map feature via the insertion of one or more additional nodes between the two nodes that defined the arc. The position of each arc split point/node insertion point may be based on a position associated with each attribute associated with the linear map feature.

By way of an example, a road segment (defined by a first node, a second node and an arc therebetween) may be associated with a first attribute (i.e. a speed limit of 50 km/h) for a first half of the road segment, and associated with a second attribute (a speed limit of 80 km/h) for the second half of the road segment. In a sectioned map, the road segment would be sectioned by inserting a new node between the first and second nodes, halfway along the arc, to split the arc into two sections, i.e. two sub-arcs. The first attribute is then able to be uniquely associated/tagged with or attributed to the first section/sub-arc, i.e. the entirety of the sub-arc [cf. the first attribute being associated with just a part of the arc]. Likewise, the second attribute is uniquely associated/tagged with or attributed to the second section/sub-arc [cf. the second attribute being associated with just a part of the arc]. In such a manner, the position and extent/length of the attribute is effectively defined by the position and extent/length of the section/sub-arc that the attribute is associated/tagged with or attributed to (in effect, the positional information of the attribute is encoded in the position of its section/sub-arc).

In a sectioned map, rather than the road segment being associated, just in part, with the first attribute and associated, just in (another) part, with the second attribute; instead the first attribute is tagged/attributed to the whole/entirety of the first section/sub-arc of the road segment, and the second attribute is tagged/attributed to the whole/entirety of the second section/sub-arc of the road segment.

Similarly, where the attribute relates to a point-like attribute rather than an extended attribute (e.g. a particular point/position along the road segment where the speed limit changes, rather than an extent/length of the road segment having a first speed limit and another extent/length of the road segment having a second speed limit), in a sectioned map, a node is inserted at a position of the point-like attribute and the point-like attribute is linked/tagged/attributed to the inserted node with the point-like attribute. In such a manner, the position of the attribute is effectively defined by the position of the node that the attribute is uniquely associated with/tagged/attributed to (in effect, the positional information of the attribute is encoded in the position of its associated/tagged/attributed node).

Conventionally, in a sectioned map, where a linear map feature is associated with plural attributes, the linear map feature is sectioned/fragmented/split into sections until each attribute can be uniquely associated with/tagged/attributed to: an arc or newly split off sub-arc that represents the road segment, or a node or newly inserted node that represents the road segment.

With reference to the example of unsectioned map data of a linearly referenced digital map of Fig. 1, if such map data were instead to be provided in the form of map data of a conventional sectioned digital map, then the road segment would be sectioned based on all of the attributes. In this regard, new nodes would be inserted between the first and second nodes at each of the positions 208, such that the road segment would be sectioned into 4 sections:
1^{st} section from 0 to 15m - which would be associated with attributes: Concrete, 50 km/hr and 4 lanes;
2^{nd} section from 15m to 36m - which would be associated with attributes: Asphalt, 50 km/hr and 4 lanes;
3^{rd} section from 36m to 43m - which would be associated with attributes: Asphalt, 40 km/hr and 4 lanes;
4^{th} section from 43m to 50m - which would be associated with attributes: Asphalt, 40 km/hr and 3 lanes.

In a conventional sectioned digital map, a map feature is sectioned based on all of the attributes that relate to the map feature.

Conventional sectioned map data is not always optimal. Conventional sectioned map data may not provide flexibility/customisability as to which attributes are to be used as the basis for sectioning map data.

However, in examples of the present invention, selectively configurable sectioning is performed based on a particular set of attributes so that customised sectioned map data may be generated. In this regard, rather than a road segment being sectioned based on all attributes (of which there could be a high number) of the road segment; instead, selective sectioning may be performed based on a selected set of attributes of the road segment (i.e. a selected subset of all the possible/available attributes). The selected set of attributes may be a subset of all of the attributes or, in some examples, the selected set of attributes may correspond to a selection of all of the attributes.

Advantageously, a user of the map data may select which attributes it would like map data to be sectioned based on, i.e. a user can choose a sectioning strategy to their liking. This may enable, for example, the map data may be sectioned in the same or a similar manner to sectioning adopted by the user in pre-existing digital maps the user is already using (e.g. digital maps the user already has covering geographical regions that may be different to or adjoining a geographical region covered by the map data). This may facilitate and reduce complexities in the processing and management of map data as well as its integration into pre-existing digital maps a user of the map data upgrading its digital maps and integrating the sectioned map data into its digital maps. Furthermore, a user may then replace previously adopted map data with newly sectioned map data without require adaptation of existing software. Using only a relevant sub-set of attributes may further avoid unnecessarily sectioning the map based on attributed that are not relevant to a particular user, thus minimizing required storage space and/or bandwidth and/or processing requirements. A same linearly referenced map may thus be used to generate a plurality of differently sectioned maps for a plurality of users with different requirements.

Yet furthermore, as will be discussed further below, examples of the present invention enable sectioning to be performed using linearly referenced attributes (as discussed further below).

Fig. 2 schematically illustrates a method 20 (which may be computer-implemented) of generating sectioned map data. The method of Fig. 2 is described with reference, not least, to Figs. 1, 3 and 4.

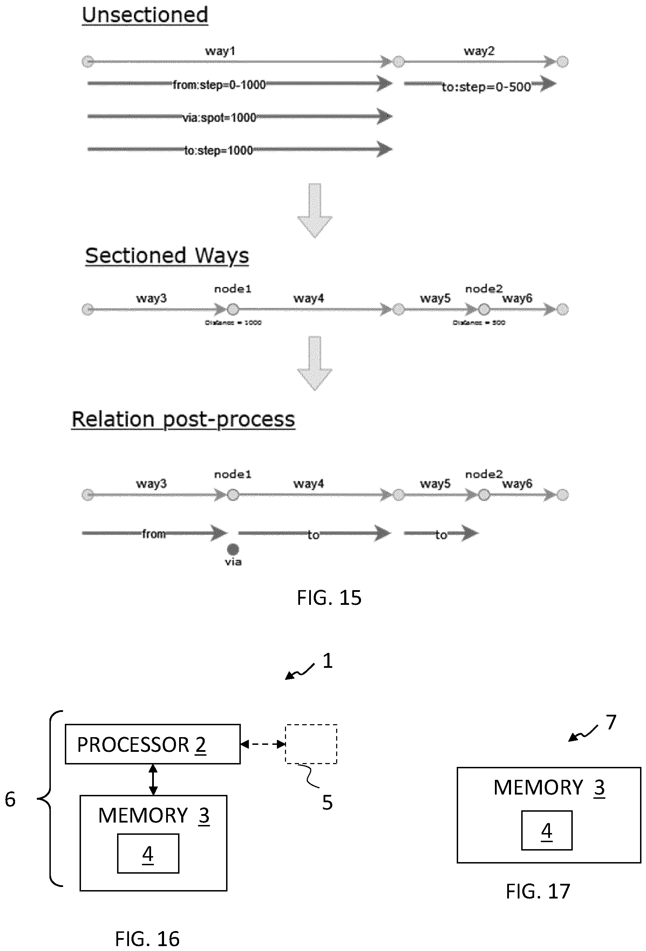

The component blocks of Fig. 2 are functional and the functions described can be performed by a single physical entity (such as is described with reference to Fig. 16). The functions described can also be implemented by a computer program (such as is described with reference to Fig. 17).

In block 21, map data 201 of a digital map is obtained. In the regard, map data 201 similar to that as shown in Fig. 1 may be obtained, hence the discussion and details of the map data of Fig. 1 apply to the obtained map data of block 21. Obtaining the map data may comprise: receiving the map data (e.g. from another apparatus not least such as a database or server comprising map data), accessing/retrieving the map data (e.g. from a local or remote memory storage), or determining the map data.

The map data 201 obtained in block 21 comprises segment data 202 indicative of one or more segments 203 of one or more linear map features 204 (e.g. a primary immutable layer of a digital map in which nodes 209 and an arc 210 representing a segment 203 of a road 204 as shown in Fig. 1).

The map data 201 obtained in block 21 also comprises segment attribute data 205 (e.g. a higher attribute or VAD layer) indicative of:
attributes 206 associated with each segment, wherein the one or more attributes are selected from a first set of attributes 207, and
at least one position 208 of each attribute within its respective segment.

In the map data 201 that is obtained in block 21, the at least one position of each attribute within its respective segment is defined, in the segment attribute data 205, via linear referencing. In this regard, the segment attribute data 205 may comprise VAD with LR definitions).

Linear Referencing "LR" is a technique that defines a position (i.e. a point-like location or an extended length) of an attribute with respect to a road segment (which is defined in the segment data of the base/reference digital map) that the attribute is associated with.

With LR, map content (i.e. an attribute for a road segment), can be described linearly by using a distance (which may, not least for example, be defined in centimetres, cm) along the road segment. LR may thereby effectively be used to define and indicate where an attribute of a road segment changes by using a distance along the road segment where the attribute changes.

LR may be based on specifying "distance along" a line (e.g. an arc resenting a road segment). LR-ed attribute data may be provided in the form of a tag with an LR keyword attached at the end of a tag name to indicate a type of "distance along/offset point" definition of the tag's value.

Possible LR keywords that may be used to indicate differing liner referencing types include:

| LR keyword / type | Description | Examples |
|---|---|---|
| :spot | The value is applied on/at an offset point (node) on the road segment | Barrier, sign, gate |
| :step | The value is applied to the road segment from an offset point to a next offset point, or for an indicated range | Surface, Speed, Lanes |
| :linear | The value is applied from an offset point to the next offset point, but the value is not constant but a variable value that changes linearly between the two points | Height, curvature |

Typically, spot attributes may be assigned/attached to a node, whereas step and linear attributes may be assigned/attached to an arc.

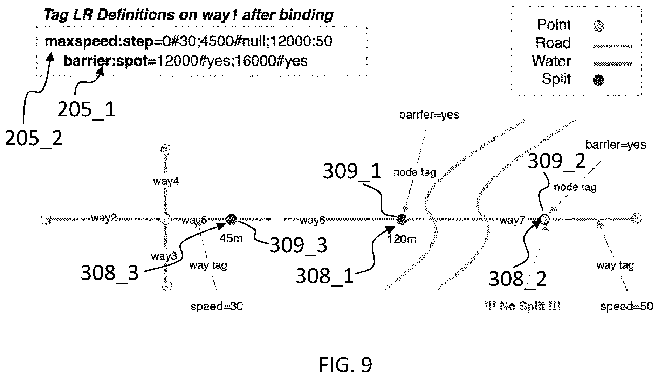

As with selective sectioning using other LR attribute types to generate sectioned LR map data, selective sectioning using a spot attribute leads to an insertion of a new node (if there is not already a node the appropriate offset point/position). However, unlike other LR attribute types (e.g. step and linear attributes) for a spot attribute, an attribute value is assigned/applied to the new node itself. Also, in spite of the insertion of a new node into a previous arc, selective sectioning using a spot attribute need not necessarily also result in a splitting of the previous arc to create two new arcs and two new IDs for the two new arcs. In this regard, the previous arc and its ID, may be kept in the resultant sectioned LR map data and no new IDs for any new arcs are created and stored in the sectioned LR map data. In effect, a spot attribute need not necessarily result in a splitting of an arc (as discussed below and shown with respect to Fig. 9), but in other examples it could result in a splitting of an arc.

By way of an example, the LR-ed attribute 206_2 regarding the speed limit of the road segment of Fig. 1 being 50 km/h from 0 to 36m and 40 km/h thereafter may be represented by the following LR definition:
maxspeed:step=0#50;36#40 wherein:
"maxspeed" is a tag name
"step" is a LR keyword
"0" is a first offset point
"50" is a value applied on the road segment from the first offset point
"36" is a second offset point
"40" is a value applied on the road segment from the second offset point.

A specification (e.g. "LR-spec") may be provided for defining the format and syntax of an LR-ed attribute. For example, the LR-spec may define a number of delimiters that are allowed to enable identification of differing parts of an LR-ed attribute. Such delimiters may include:
: (colon)
; (semi-colon) and
# (hash)
= (equal) may be is used to indicate a first split.

In the above example:
maxspeed:step = key
0#50;36#40 = LR value
0#50 is an element in the value split by ; (semi-colon)
0 is a distance (in cm)
50 is an attribute value

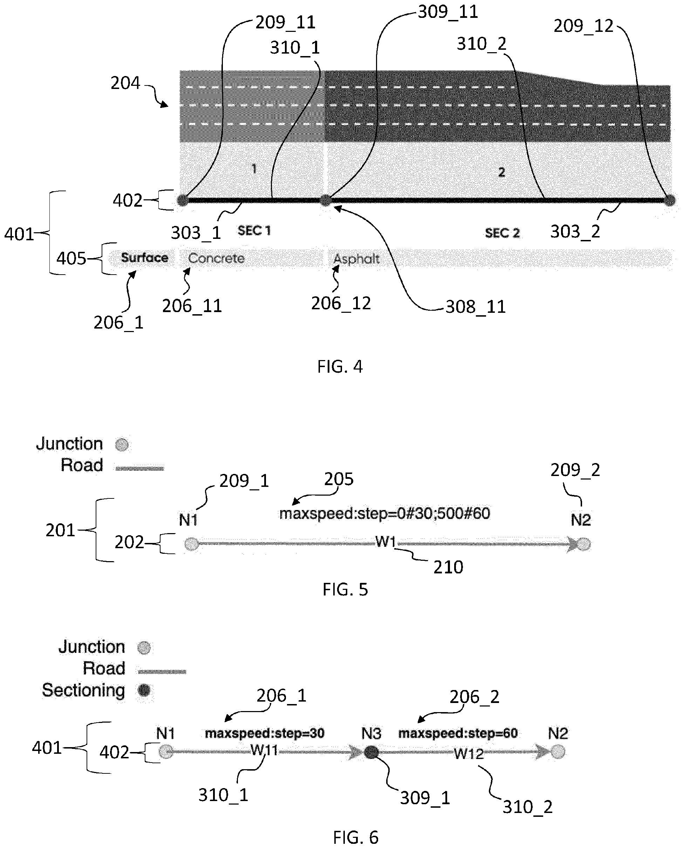

Further examples of LR-ed attribute data 205 is shown and discussed further in Figs. 5, 7 and 8.

In block 22, sectioning configuration data 301 is obtained. The sectioning configuration data is used for configuring sectioning of the map data 201.

The sectioning configuration data comprises an indication of a second set of attributes 307, wherein the second set of attributes is a subset of the first set of attributes 207. The sectioning configuration data enables sectioning of the map data to be performed based at least in part on the second set of attributes.

In some examples, the second set of attributes need not be limited to being a subset of the first set of attributes, but instead the second set of attributes could for instance be the same as the first set of attributes. Accordingly, when the first set of attributes corresponds to all attributes associated with a road segment and the second set of attributes corresponds to the first set of attributes, the sectioning configuration data would enable sectioning of map data to be performed based on all the attributes (i.e. the sectioning need not be limited to sectioning based on a subset of all the attributes).

Fig. 3 schematically illustrates an example of sectioning configuration data 301. The sectioning configuration data's second set of attributes 307 (consisting of the attributes 206_1, 206_11 and 206_12 - related to surface types) are a subset of the first set of attributes 207 (consisting of the attributes: 206_1, 206_11 and 206_12 - related to surface types; 206_2, 206_21 and 206_22 - related to speed; and 206_3, 206_31 and 206_32 - related to lanes).

The attributes of the second set of attributes 307 of the sectioning configuration data may be selected, e.g. by a user, from the first set of attributes 207. In this manner, the user may select the attributes that are to be used to control sectioning (i.e. such that the type/format of sectioning performed on the sectioned map data might corresponds to a type/format of sectioning of the user's pre-existing/current digital maps).

In block 23, sectioned map data 401 is generated. The generation of the sectioned map data 401 comprises sectioning the map data 201 in accordance with the sectioning configuration data 301 and the second set of attributes indicated thereby.

Each attribute of the second set of attributes may be associated with an attribute category (for instance, the attributes Concrete 206_11 and Asphalt 206_12 are both associated with the attribute category Surface 206_1). Sectioning the map data in accordance with the sectioning configuration data may comprises sectioning the road segment 203 of the map data 201 to generate two sub-segments 303_1 and 303_2 of the sectioned map data wherein the two segments of the sectioned map data are each associated with a single attribute (i.e. either Concrete or Asphalt) for the attribute category over its length.

Fig. 4 schematically illustrates an example of the sectioned map data 401, generated from the sectioning of the map data 201 based on the sectioning configuration data 301. Here, the sectioning configuration data 301 effectively indicates that the map data 201 is to be sectioned based on the positions of surface related attributes. In this regard, rather than sectioning the map data 201 based on all possible attributes/attribute category types, the map data 201 is instead sectioned based on a selected subset of possible attributes/attribute category types - namely surface related attributes.

The process of sectioning the map data 201, based on the sectioning configuration data 307, to generate the sectioned map data 401 may comprise:
determining a segment 203 that is associated with an attribute 206_11 of the second set of attributes 307 of the sectioning configuration data 307 (i.e. identifying/selecting segment 203 as the attribute date 205 indicates that this segment is associated with the attribute Concrete 206_11 of the second set of attributes 307 indicted in the sectioning configuration data 307);
determining a position 208_11, within the determined segment 203, of the attribute 206_11 of the second set of attributes indicted in the sectioning configuration data 307; and
sectioning the map data 201 based at least in part on:
   the determined segment 203), and
   the determined position 208_11.

Such sectioning may comprise splitting, at a split point 308_11, the arc 210_1 between the two nodes 209_11, 209_12 that represent the determined segment 203 so as to form two split arcs/sub-arcs/sections 310_1, 310_2; wherein the position of the one split point corresponds to the determined position 208_11.

Such sectioning may alternatively or additionally comprise inserting, at an insertion point 308_11, a node 309_11 between the two nodes 209_11, 209_12 of the determined segment 203; wherein the position of the insertion point is based at least in part on the determined position 208_11.

Such sectioning may be referred to as "Second Stage Sectioning" or "S3". S3 enables selective sectioning and the selective attachment of attributes (i.e. attribution of attributes) to a node and/or way.

As shown in Fig. 4, the sectioned map data 401 comprises segment data 402 in which a new node 309_11 has been inserted between the first node 209_11 and the second node 209_12, thereby splitting/fragmenting/dividing the arc 203 into two sections/sub-arcs 301 _1 and 303_2. The location of the new node/split point corresponds to the position of the surface related attribute indicated in the segment attribute data 205, i.e. the position where the surface changes from concrete to asphalt. The attribute "concrete" is then tagged/attributed/assigned to the first section/sub-arc 301_1, and the attribute "asphalt" is then tagged/attributed/assigned to the second section/sub-arc 301_2.

If, rather than being an extended attribute applicable to an extent/length of the road segment, the attribute were instead a point-like attribute applicable just a particular position (for instance if the attribute were indicative of a change of surface from concrete to asphalt), a similar sectioning process may be employed, except that rather than tagging/attributing/assigning the attribute to one of the sections/sub-arcs, instead the attribute is tagged/attributed/assigned to the node.

In a sectioned map, an attribute can only be linked to either a way or a node. Point-like attributes (which may be referred to as spot type attributes) can be linked to a node. Whereas, extended-like attributes (which may be referred to as step or linear type attributes) attributes can be linked to an arc.

The above described method 20 may enable sectioning of linearly referenced map data. Such sectioning may comprise creation of nodes and optionally splitting of ways so as to make it possible to link attributes to a node or an arc (i.e. link point-like attributes to a node and link extended-like attributes to an arc).

Fig. 5 schematically shows a further example of map data 201 comprising:
segment data 202 representative of a road segment, and
LR-ed segment attribute data 205 associated with the road segment.

The road segment is represented in the segment data 202 via nodes N1 209_1 and N2 209_2 defining an arc/way W1 210.

The LR-ed segment attribute data 205 represents speed limit related attributes associated with the road segment via the following tag:
maxspeed:step=0#30;500#60

This tag indicates that:
from a first offset point at 0m from the node N1 (i.e. from N1 itself), the speed limit is 30 km/h; and
from a second offset point at 500m from the node N1, the speed limit is 60 km/h/

Fig. 6 schematically shows an example of sectioned map data 401 formed by sectioning the map data of Fig. 5 based on speed limit related attributes.

In this regard, the sectioned map data 401 comprises segment data 402 in which a new node N3 309_1 has been inserted between N1 and N3, thereby splitting the arc/way W1 into two sections/sub-arcs W11 301_1 and W12 303_2. The location of the new node/split point corresponds to the position 500m indicated in the segment attribute data 205. The speed related attribute "30 km/h" is tagged/attributed/assigned to W11, and the speed related attribute "60 km/h" is tagged/attributed/assigned to W13.

The above discussed examples of sectioning have considered performing a sectioning process based on sectioning configuration data that indicates just a single attribute/attribute type to be used for sectioning map data, i.e.
Fig 4 sectioning based on surface type, and
Fig 6 sectioning based on speed limit.

It is to be appreciated that the sectioning of map data may be based on plural attribute/attribute types. In this regard, the sectioning of map data may be based on sectioning configuration data indicative of plural attributes.

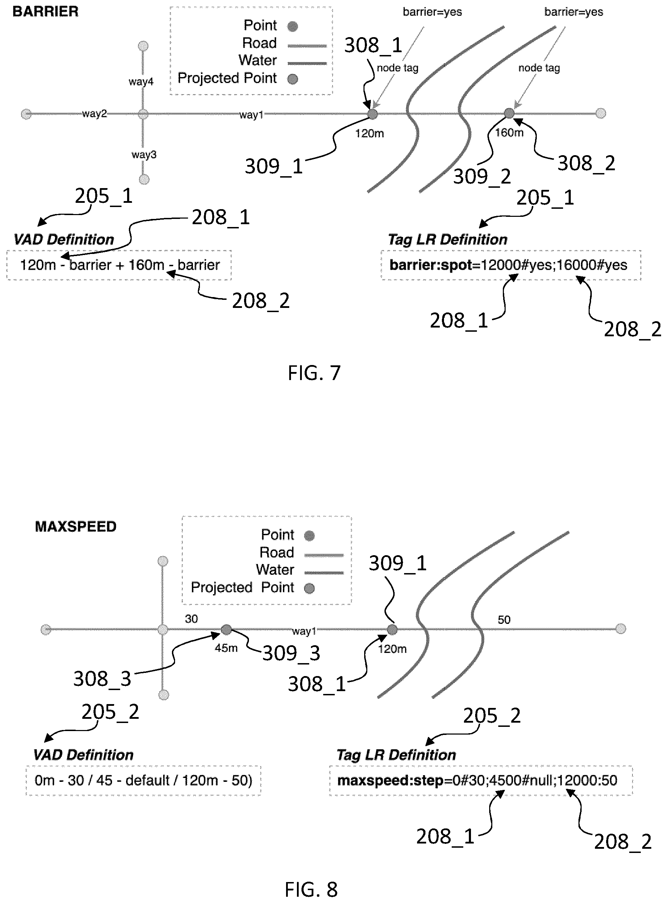

FIGs. 7 to 9 schematically illustrate performing a sectioning process based on plural attributes/attribute types, namely sectioning based on both:
spot type attributes - barriers (i.e. presence of barriers along a road segment), and
step type attributes - speed limit (i.e. change of speed limit along a road segment).

Fig. 7 schematically illustrates map data with segment data comprising a plurality of arcs/ways (namely: way1, way2, way3 and way4) representative of a network of road segments.

Fig. 7 also schematically illustrates two differing forms/formats of segment attribute data 205_1 for indicating the spot type attributes associated with way 1 and their positions via LR:

| | |
|---|---|
| VAD Definition: | 120m - barrier + 160m - barrier |
| Tag LR Definition | barrier:spot-120000#yes;16000#yes |

(The distances provided in the VAD Definition are in metres, whereas the distances indicated the Tag LR Definition are in centimetres)

Each form of segment attribute data 205_1 indicates two positions 208_1 208_2 of two barriers associated with way1 - namely a barrier at 120m along way 1 and another barrier at 160m along way 1.

In a first part of the sectioning process, nodes are proposed/inserted based on the barrier attribute type - which is a spot type attribute that is to be tagged/attributed/assigned to a node (rather than to an arc). In this regard, new nodes 309_1 and 309_2 are inserted at insertion points 308_1 and 308_2 respectively at distances 120m and 160m along way 1. The attribute "barrier=yes" is tagged/attributed/assigned to each of the two new nodes. The newly inserted nodes may be referred to as "spot" nodes (e.g. as opposed to "split nodes" as discussed below with respect to Fig. 8) in that they are effectively merely nodes inserted so as to enable a spot attribute to be tagged/attributed/assigned to the spot node. The spot nodes are not used to split a way into sub-ways. In this regard, since the attribute type is a spot type attribute, way 1 is not split up into new (sub-)ways in spite of the insertion of the two new nodes. Hence, in this first part of the sectioning process in which sectioning is performed based on spot type attributes, way 1 (which has a length of 240m between its two respective points) is not split into any new ways, i.e. in this first part of the sectioning process, way 1 is not split into:
a way having a length of 120m between one of the respective points and new node 309_1, a way having a length of 40m between new nodes 309_1 and 309_2, and
a way having a length of 80m between new node 309_2 and the other respective point. (However, as will be discussed below, in a second part of the sectioning process, in which sectioning is performed based on step type attributes, way 1 is split into new ways).

Fig. 8 schematically illustrates the same segment data of Fig. 7. Fig. 8 also schematically illustrates two differing forms/formats of segment attribute data 205_2 for indicating the step type attributes associated with way 1 and their positions via LR:

| | |
|---|---|
| VAD Definition: | 0m - 30 / 45 - default / 120m - 50 |
| Tag LR Definition | maxspeed:step=0#30; 4500#null; 12000:50 |

Each form of segment attribute data 205_2 indicates that way 1's speed limit is:
from 0m to 45m along way 1, the speed limit is 30 km/hr;
from 45m to 120m along way 1, the speed limit is a default speed limit; and
from 120 onwards along way 1, the speed limit is 50 km/hr.

As noted above, the segment attribute data in Fig. 7 relates to stop type attributes, whereas the segment attribute data in Fig. 8 relates to step type attributes. The change of attributes indicated by Fig. 8's step type segment attribute data therefore gives rise not only to the insertion of new nodes but also the splitting of ways and the tagging/attribution/assigning of the attribute values to ways (whereas Fig. 7's stop type segment attribute data only gave rise to the insertion of new nodes, but not any splitting of ways, and the tagging/attribution/assigning of the attribute values to the new nodes).

In a second part of the sectioning process, nodes are proposed/inserted at positions based on the speed limit attribute type. In this regard, new nodes 309_3 and 309_1 are inserted at insertion points 308_3 and 308_1 respectively at distances 45m and 120m along way 1. The newly inserted nodes may be referred to as "split" nodes (e.g. as opposed to "spot nodes" as discussed above with respect to Fig. 7) in that they are nodes inserted so as to split a way into sub-ways and enable a step attribute to be tagged/attributed/assigned to at least one of the sub-ways. Following the insertion of the new (split) nodes, way 1 is split into 3 new sub-ways (shown in Fig. 9):
way 5 (having a length of 45m between one of the respective points and new node 309_3),
way 6 (having a length of 75m between new nodes 309_3 and 309_1), and
way 7 (having a length of 80m between new node 309_1 and the other respective point).

The attribute "30 km/hr" is tagged/attributed/assigned to the first new sub-way. The attribute "default speed" is tagged/attributed/assigned to second new sub-way. The attribute "30 km/hr" is tagged/attributed/assigned to third new sub-way.

Fig. 9 schematically illustrates the resultant sectioned map data, following on from collating the newly inserted spot and split nodes and newly created sub-ways and their respective tagged/attributed/assigned attribute(s). It is noted that instead of creating two nodes at 120m, the nodes at 120m from each of the first and second parts of the sectioning process are combined into a single node at 120m. It is also noted that whilst the nodes 309_3 and 309_1 are split nodes that define split points (splitting the former way 1), spot node 309_2 does not define a split point that splits a way. In a sectioned map, an attribute can only be linked to either a way or a node. Accordingly, the spot node is inserted so that a stop attribute can be linked to a node.

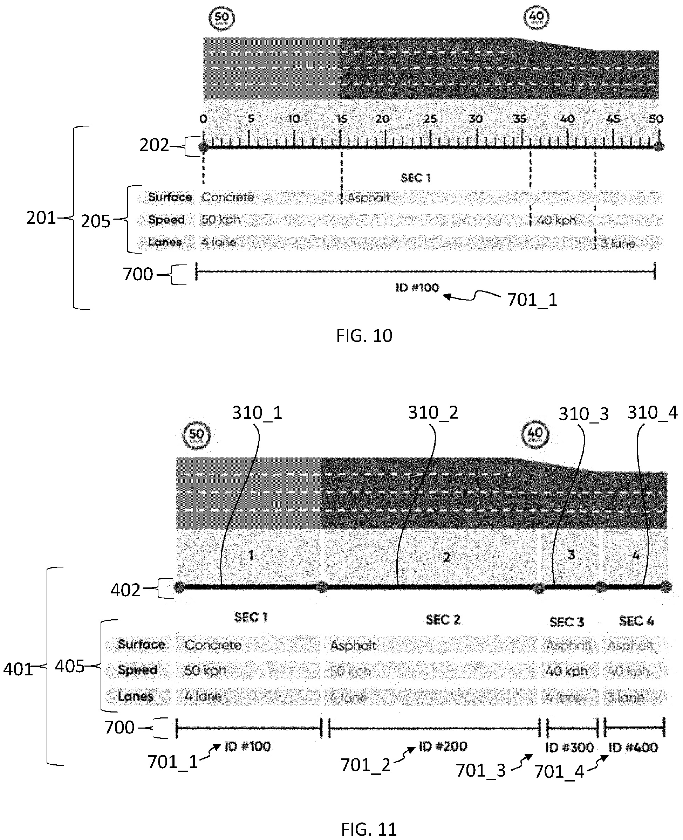

Fig. 10 schematically illustrates an example of map data 201 similar to that of Fig. 1. The map data comprises: segment data 202 (only one of a plurality of segments is shown), and segment attribute data 205 (only a subset [three] of a set of a plurality of types/categories of attributes is shown).

The map data also comprises segment identification data 700 which is indicative of an identifier 701 for each road segment (i.e. each arc) of the segment data (only one of a plurality of identifiers is shown). The segment identification data may also be indicative of an identifier for each node of the segment data (not shown).

Fig. 11 schematically illustrates an example of sectioned map data 401, which corresponds to a sectioning of the map data 201 of Fig. 10 based on the attributes of the subset of the three types/categories of attributes - namely: surface, speed and lanes.

The segment data 402 of the sectioned map data represents the newly formed 4 sections 310_1 to 10_4 which are defined by the original nodes of the segment data 202 and newly inserted nodes and arcs therebetween.

The sectioned map data comprises segment identification data 700 which is indicative of identifiers 701 for each: section/sub-arc, node (and road segment) represented in the segment data 402.

The identifiers of the segment identification data of the sectioned map data may be based on the segment identification data of the map data.

For instance, the first and last nodes of the sectioned map data are the same (i.e. have the same position) as the first and last nodes of the map data. Accordingly, the identifiers for the first and last nodes of the map data may be re-used for the first and last nodes of the sectioned map data.

The newly inserted nodes and the newly created arcs of the sectioned map data may be provided with new identifiers.

In this regard, for each arc/segment of the map data that has been split in the sectioned map data, a new identifier is generated and assigned for each split arc/segment of the sectioned map data. This ensures that "children" split arcs/segments are not simply reassigned the same identifier as their "parent" arc/segment. Likewise, for each (new) node of the sectioned map data that has been inserted between two nodes of the map data, a new identifier is generated and assigned for each inserted node.

Whereas, for each segment/arc of the sectioned map data that has not been split, the segment may use the same identifier as used for the segment/arc in the map data. Likewise, for each node of the sectioned map data that corresponds (i.e. having the same position) to a node of the map data, the node of the sectioned map data may use the same identifier as used in the map data. This ensures that, to the extent possible, i.e. wherein an arc or node is unchanged, there is a continuity in the identifiers used.

New identifiers for the new nodes (which have been inserted between the original nodes of the map data) may be generated based, at least in part, on one or both identifiers of one or both of the original nodes of the map data. Likewise, new identifiers for the new sections/sub-arcs (which have been formed by splitting original arc(s) of the map data) may be based, at least in part, on identifier(s) of the original arc(s) or one or more of its nodes.

The new identifiers may be generated via a deterministic ID generation method.

A mapping between identifiers of the map data and identifiers of the sectioned map data may be generated. A mapping table may be formed that provides a history/log of previously used identifiers and how one identifier relates to another.

The segment identification data of the sectioned map data may comprise a history of previous identifiers (not least for example identifiers previously assigned to arcs prior to being split in a sectioning process).

The above rules/conditions regarding segment identification data of the sectioned map data and identifying nodes/arcs of the sectioned map data may provide ID stability.

There now follows a brief discussion of a normalisation procedure, which may be employed prior to/during a sectioning process, in order to avoid:
the insertion of nodes too close together,
the creation of sub-arcs that are too short, and/or
the creation of too many nodes and sub-arcs.

Having multiple data producers of LR-ed attributes (based on which segmentation may be performed) without knowledge of each other can lead to excessive and small segmentation. This may be reduced by implementing normalization of the linearly referenced information, where distances are reduced to a common segmentation point.

The normalisation process is performed upon determining that a position of an attribute of the second set of attributes (i.e. the position of an attribute based on which sectioning is applied) is within a threshold separation distance of a position of another other attribute of the second set of attributes.

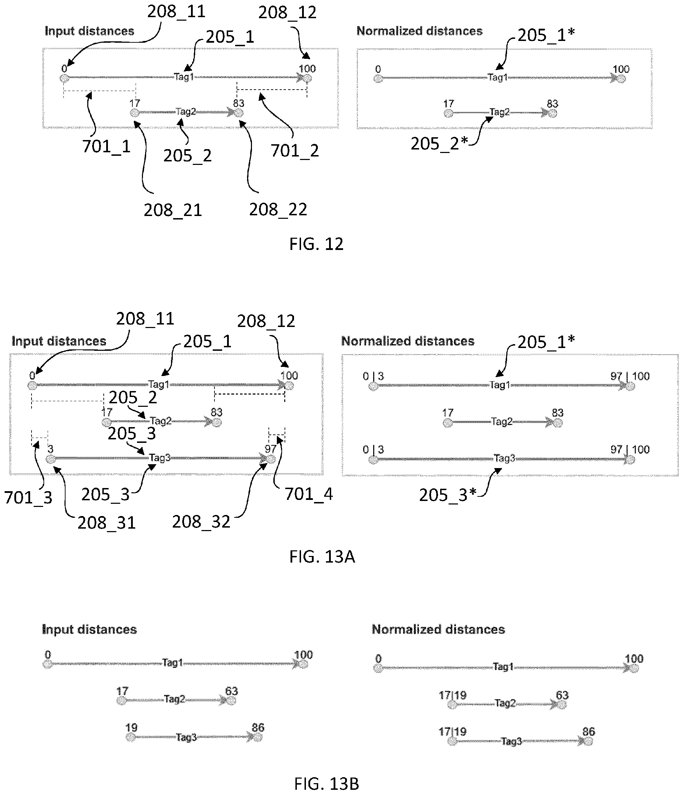

Fig. 12 schematically illustrates two pieces of segment attribute data LR-ed attribute Tag1 205_1 and LR-ed attribute Tag2 205_2, both of which are associated with the same road segment. A sectioning procedure is to be formed based on both of the two Tags. The two tags relate to differing attributes of differing types, e.g. Tag1 may relate to concrete road surface and Tag2 may relate to 30 km/hr speed limit.

The attribute of Tag1 has an extent from 0 to 100 (which is defined via the positions 208_11 and 208_12 of the segment attribute data Tag1 205_1). The attribute of Tag2 has an extent from 17 to 83 (which is defined via the positions 208_21 and 208_22 of the segment attribute data Tag2 205_2).

In the example of Fig. 12, the threshold separation distance is 10. Since the separation distance between each position is greater than 10, a normalisation procedure is not performed on any of the positions, or to put it another way, the normalised distances for each tag are the same as the original/initial distance of each tag.

For instance, the separation distance 701_1 between 208_11 and 208_21 is greater than the threshold separation distance (i.e. 17 > 10); likewise the separation distance 701 _2 between 208_12 and 208_22 is greater than the threshold separation distance (i.e. 17 > 10).

Fig. 13A schematically illustrate three pieces of segment attribute data: LR-ed attribute Tag1 205_1 and LR-ed attribute Tag2 205_2 (as per Fig. 12) and also LR-ed attribute Tag3 205_3; all associated with the same road segment. A sectioning procedure is to be formed based on all three of the two Tags. As with Fig. 12, Tag1 may relate to concrete road surface and Tag2 may relate to 30 km/hr speed limit. Tag3 may relate to 2 lanes.

In the example of Fig. 13A, the threshold separation distance is also 10. However, since the separation distance between certain of the positions is less than 10, a normalisation procedure is performed on such positions.

The positions of Tag2 all have a separation distance greater than the threshold separation distance from each position of Tag1 and Tag 3. Hence no normalisation need to be applied to Tag 2, i.e. the positions of Tag2 do not need to be normalised/adjusted.

However, the positions of Tag1 are less than the threshold separation distance from the positions of Tag3. In particular, the separation distance 701_3 is less than the threshold separation distance (i.e. 3 < 10); likewise the separation distance 701_4 is less than the threshold separation (i.e. 3 <10).

Accordingly, a normalisation, i.e. adjustment, of the positions of either Tag1 and/or Tag 3 is required to generate a normalised distances for a normalised Tag1 205_1* and/or a normalised Tag 3 205_3*.

In this regard, the position 208_11 of Tag1 may be adjusted based on the position 208_31 of Tag3; and/or the position 208_31 of Tag3 may be adjusted based on the position 208_11 of Tag1 - and the adjust position may be assigned to the respective Tag.

For instance, the position 208_11 could be adjusted so as to correspond to the position 208_31 (i.e. the position 208_11 could be adjusted from 0 to a normalise position of 3); or conversely the position 208_31 could be adjusted so as to correspond to the position 208_11 (e.g. the position 208_31 could be adjusted from 3 to a normalise position of 0).

Alternatively, both positions could be adjusted to correspond to an average position of the two positions (e.g. both position 208_11 and position 208_31 adjusted to a normalise position of 1.5).

Similar adjustments may be made to the positions 208_12 and 208_32, thereby defining a normalised Tag1 205_1* and/or a normalised Tag 3 205_3*.

The sectioning may then be performed based on the normalised Tags and their normalised positions. In this regard:
a segment of map data may be split at a split point, wherein the position of the split point is based at least in part on the adjusted position; and/or
a node may be inserted at an insertion point between two nodes of a segment of map data, wherein the position of the insertion point is based at least in part on the adjusted position.

The sectioning based on such normalised Tags may avoid the creation of:
nodes being too close together (i.e. within a threshold separation distance from one another),
sub-arcs being too short (i.e. less than a threshold length), and/or
too many nodes and sub-arcs
in the sectioned map data.

The start and end positions of a tag or way could be normalised. However, in other examples, normalisation can be done in the middle of a tag/LR definition, such as is shown with regards to Fig. 13B.

Fig. 13B schematically illustrate a scenario somewhat similar to that of FIG. 13A with three pieces of segment attribute data/LR-ed attributes: Tag1, Tag2 and Tag3. However, the start and end positions of Tag3 differ, namely instead of being at 3 and 97 (as in Fig. 13A), they are at 19 and 86. It is noted that, in this scenario, Tag3's position 19 is <10 from Tag2's position 17. Whereas Tag3's position 63 is >10 from Tag2's position 86.

After normalisation, the normalised distances would be:
Tag1: 0 and 100
Tag2: 17|19 and 63
Tag3: 17|19 and 86

After sectioning using the three tags and their normalised distances, this would yield:
- a first way (from 0 to the node that ends up inserted based on 17|19 - which could for instance an average of the two positions: 18) assigned with only the attribute of Tag1;
- a second way (from that first inserted node to a second new node inserted at 63) assigned with the attributes of Tag1, Tag2 and Tag3;
- a third way from the second new node inserted at 63 to a third new node at 86 with Tag1 and Tag3; and
- a fourth way from the new node at 86 to the original node at 100 assigned with only the attribute of Tag1.

There now follows a brief discussion of a linear reference re-interpolation procedure which may be employed during a sectioning process.

In examples of the invention, a user is effectively able to select a particular/custom set of attributes (i.e. a second set of attributes 307 indicated in sectioning configuration data 301, which is a subset of a first set of attributes for segments of the map data), and sectioning to be performed based on such user selected attributes. Attributes that were not selected/used for sectioning may nevertheless be included along with the sectioned map data, i.e. as segment attribute data for the sectioned map data wherein such segment attribute data is indicative of:
the non-selected attributes/attributes not used or sectioning (i.e. a third set of attributes comprising attributes that are in the first set of attributes but not in the second sets of attributes) of road segments of the sectioned map data, and
a position of each such attribute within the road segment.

Each attribute is defined via linear referencing. Such linear referencing would be linearly referenced with respect to nodes of the map data. However, it would be preferable if the non-selected/non-used third set of attributes were linearly referenced with respect to nodes of the sectioned map data (i.e. rather than merely nodes of the map data - since nodes of the sectioned map data may include new/additional inserted nodes and sub/split segments).

In the linear reference re-interpolation procedure, attributes which were not selected/not used for sectioning are re-interpolated/corrected so as to be linearly referenced with respect to nodes (including newly inserted nodes) of the sectioned map data.

In this regard, the linear reference re-interpolation procedure re-interpolates/corrects the linear references of non-selected/non-used attributes to correct/adjust their linear referencing from being with respect to nodes of the map data, to being with respect to nodes/newly inserted nodes of the sectioned map data.

This means that all skipped sectioning attributes are recalculated and translated to fit the new fragmented situation/sectioning of the sectioned map data. Depending on how the linear referencing is defined, a position/distance of an attribute may need to be recalculated, in some cases also an attribute value itself (e.g., linear value like gradient, curvature) may need to be recalculated.

By way of an example, with respect to Fig. 1, one could consider the first set of LR-ed attributes for segment 203 of the map data (which are linearly referenced with respect to node 209_11 of segment 203 of the map data) as being:
i) Surface attribute, e.g. Surface:step=0#Concrete;15#Asphalt
ii) Speed attribute, e.g. Speed:step=0#50;36#40
iii) Lanes attribute, e.g. Lanes:step=0#4 Lane;43#3 Lane

In the sectioned map data of Fig. 4, only i) the Surface attribute is selected used for sectioning. Such sectioning results in the insertion of a new node (309_11) at position 15.

The non-selected LR-ed attributes, i.e. the Speed attribute ii) and Lanes attribute iii), can nevertheless still be associated with and/or included with the sectioned map data, e.g. as segment attribute data for the sectioned map data (which is analogous to the segment attribute data 205 for the map data 201).

However, the linear referencing of the non-selected LR-ed attributes needs to be adjusted/corrected. Instead of being linearly referenced with respect to the node 209_11 of segment 203 of the map data, the positions need to be linearly referenced with respect to node 309_11 of segment 303_2 of the sectioned map data.

In this regard, the position of each attribute within its respective segment of the sectioned map data may be determined. With regards to the above-described example, the linear reference re-interpolation procedure would re-interpolate/correct the linear references of the non-selected attributes to:
Speed attribute, e.g. Speed:step=0#50;21#40
Lanes attribute, e.g. Lanes:step=0#4 Lane;28#3 Lane

In effect, the positions indicated in the attributes have been translated (in this instance shifted by 15) so as to correspond to their position in the segment 303_2 of the sectioned map data.

In other examples, such as "linear type" attributes where the attribute has a variable value whose amount varies with position (e.g. height and curvature) an adjusted/re-interpolated variable value of the attribute may be determined/calculated based on a position relative to a node of the segment of the sectioned map that the attribute is in/associated with. For example, consider a linear type attribute associated with an arc representing a 100m long road segment, wherein the linear type attribute had a :linear definition indicating:
Height:linear=0#10;10000#20 i.e. indicating that, at the start of the road segment, the road segment is 10m above sea level the road segment's hight linearly increases along the length of the road segment up to a hight of 20m above sea level at the end of the road segment.

If the arc where to be split halfway along its length (e.g. due to a change in speed limit halfway along the arc/road segment) then the linear type attributes to be associated to each of the split sub-arcs would need to be re-calculated. In this regard, the linear reference re-interpolation procedure would re-interpolate/correct the linear references of the non-selected attributes to:
for the first sub-arc - Height:linear=0#10;5000#15
for the first sub-arc - Height:linear=0#15;5000#20

Segment attribute data for the sectioned map data may then be generated:
which is indicative of the Speed and Lanes attributes that are associated with the segment 303_2 of the sectioned map data, and
in which the position of each attribute within its respective segment is defined via linear referencing.

There now follows a brief discussion of a procedure for handling relations between nodes and arcs in the generation of sectioned map data, i.e. adjusting relations (defined in map data) between nodes and arcs of the sectioned map data.

Map data of a digital map may comprise relation data which is indicative of one or more relations between:
one of the one or more segments of the map data's segment data, and
at least one other of the segments of the segment data.

In this regard, relation data may be indicative of relations between nodes and/or arcs of the map data's segment data.

In a sectioning process, segment relation data for the sectioned map data may be generated based on the segment relation data of the map data. The segment relation map data for the sectioned map data may be indicative of at least one relation between:
one of the one or more segments of the sectioned map data, and
at least one other of the segments of the sectioned map data.

In this regard, segment relation data for the sectioned map data may be indicative of relations between nodes and/or arcs of the sectioned map data's segment data.

In particular, an arc/segment of the map data may have a relation with another arc/segment of the map data. The sectioning of the map data may comprise splitting the arc/segment (of the map data) into a set of two or more split arcs/segments (of the sectioned map data). the relations from nodes/arcs of the map data may either be re-applied to nodes/arcs of the sectioned map data, or the relations may need to be re-evaluated for the nodes/arcs of the sectioned map data, i.e. to 'fix' the previous relations between previous arcs and nodes that the sectioning (creation of new nodes/arcs) would have broken.

In this regard, following on from a splitting of an arc into a set of sub-arcs and/or insertion of a set of new nodes, one or more of the following may be performed:
the relation is assigned to a first subset of the set of split arcs/inserted nodes;
a null relation is assigned to a second subset of the set of split arcs/inserted nodes, wherein the second subset is different to the first subset; and
a new relation is determined which is assigned to at least one split arc/inserted node of the set of split arcs/inserted nodes based at least in part on the relation and a condition associated with the relation (such a condition may be a cardinality restricted relation or an indication of a certain limitation in traffic flow or allowed manoeuvres/turn restrictions from one segment to another).

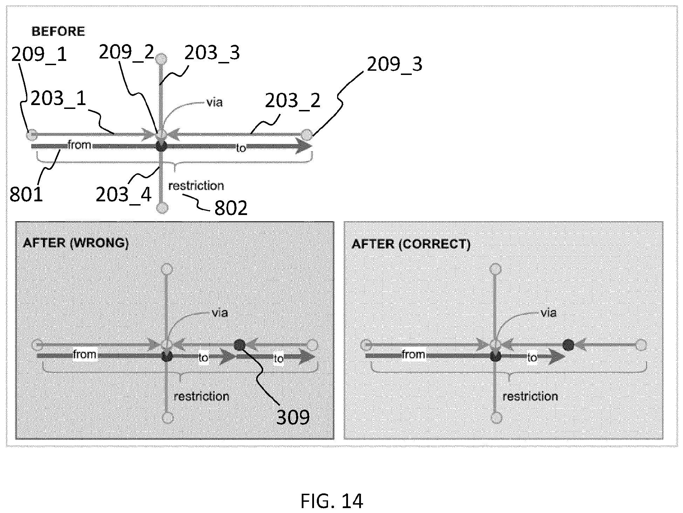

An example of adjusting relations between segments of map data for sectioned map data is shown in Fig. 14.

Initially (as schematically illustrated in the upper diagram) a map data's segment data is representative of 4 segments 203_1 to 203_4. The upper diagram also schematically illustrates relation data 801 for certain the segments. The relation data 801 is indicative of a limitation of traffic flow/allowed manoeuvre along the segments 230_1 and 203_2. In this regard, the relation data 801 _1 is indicative that traffic can only flow "from" node 209_1 (via node 209_2) "to" node 209_3 (i.e. traffic can only flow from segment 203_1 to segment 203_2, and it cannot flow from segment 203_1 to segment 203_3 or segment 203_4). The relation data is effected via assigning tags "from" and "to" the respective nodes of the segments.

As a result of the sectioning process, a new node 309 is inserted between nodes 209_2 and 209_3 such that the arc 203_2 is split into two sub-arcs. The lower two diagrams schematically illustrate two possibilities for handling relations in the sectioning of the map data of upper diagram.

The lower lefthand diagram schematically illustrates an example of relation handling wherein each of the two new sub-arcs is simply given the same relation as its parent arc. In this case, the two sub-arcs are both assigned the "to" relation, such that the relation has two "to" tags. However, under an Open Street Map ("OSM") Model, a turn restriction relation has a condition that it can only have a single "to" tag. Hence, such relation handling would violate the OSM Model since the turn restriction relation has two "to" tags.

In order to preclude violating the OSM Model for relations having certain conditions, in the lower righthand diagram, an alternative relation handling is employed wherein just one of the two new sub-arcs is given the same relation as its parent arc. In such a manner, the relation only has a single "to" tag and hence the OSM model's turn restriction relation condition is not violated.

In the discussion of relations in Fig. 14, they are described as being between existing ways. In that sense, there is an assumption that relations are handled the same way in a linearly referenced map as they are in a (further) sectioned map, namely by adding ways as members to a set.

However, this is not always the case. In particular, relations themselves may also be described in a linearly referenced way. This is especially relevant for relations that are not caused by a junction, and therefore do not necessarily involve an existing node in an LR map.

One example of a linearly referenced relation is a bus route. This can be provided as an ordered sequence of ways. However, it does not necessarily start and/or end at a junction/existing node in an LR map, indeed a bus stop could be located at some point along a way. One could therefore have a way with an LR tag indicating where the bus route begins (or ends). In the sectioning process, this could/should be handled by inserting a node and adding only the relevant new ways to the set representing the bus route (in the right order).

Another example of a linearly referenced relations are traffic lights, which can occur on linear stretches as well as on junctions. Whilst one could consider a traffic light as a spot attribute, it may be advantageous also to include as a relation as to the way for which the traffic light is relevant.

Fig. 15 schematically shows a further example of sectioning map data, in which sectioning is performed based on linearly referenced relations.

The upper part of Fig. 15 shows two unsectioned ways: way1 and way2; and their respective linearly referenced relations.

Way1 is defined by a node at position=0 and a node at position=2000. Way1 has three linearly referenced relations. Way2 is defined by the node at position=2000 and a node at position=3000. Way2 has one linearly referenced relation.

The middle part of Fig. 15 shows sectioned ways. In this, way1 has been sectioned, based on way1's linearly referenced relations, so as to be split into new ways: way3 and way4 via the insertion of new node 1 at a position 1000 along the length of former way 1. Way2 has likewise been sectioned, based on its own linearly referenced relation, so as to be split into new ways: way5 and way6 via the insertion, 500 along the length of former way 2, of new node 2.

The lower part of Fig. 15 shows a relation post-process to re-define the former linearly referenced relations (which were linearly referenced with respected to the unsectioned ways) as associate them to the appropriate newly created ways following the sectioning.

Examples of the disclosure may thereby provide selective sectioning which can be based on linearly referenced relations. This provides additional configurability/flexibility in the sectioning procedure which may be advantageous since some users may be able to deal with linearly referenced relations (in which case there is no need to section based on this) whereases other users may not.

The blocks illustrated in Fig. 2 and the various steps and functionality described above represent actions in a method, functionality performed by an apparatus, and/or sections of instructions/code in the computer program.

It will be understood that each block and combinations of blocks illustrated in Fig. 2, as well as the further functions described above, can be implemented by various means, such as hardware, firmware, and/or software including one or more computer program instructions. For example, one or more of the functions described below can be performed by a duly configured apparatus (such as a server or navigation device). One or more of the functions described below can be embodied by a duly configured computer program (such as a computer program comprising computer program instructions which embody the functions described below and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

Fig. 16 schematically illustrates a block diagram of an apparatus 1 for performing the methods, processes, and procedures described in the present disclosure (not least such as those illustrated in Fig. 2). In this regard the apparatus may be, not least for example, a server or a navigation device. The component blocks of Fig. 16 are functional and the functions described can be performed by a single physical entity.

The apparatus comprises a controller 7, which could be provided within a device such as a server or a navigation device.

The controller 6 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 6 can be as controller circuitry. The controller 6 can be implemented in hardware alone, have certain aspects in software including firmware alone or can be a combination of hardware and software (including firmware).

The controller 6 can be implemented using instructions that enable hardware functionality, for example, by using executable instructions of a computer program 4 in a general-purpose or special-purpose processor 2 that can be stored on a computer readable storage medium 3, for example memory, or disk etc, to be executed by such a processor 2.

The processor 2 is configured to read from and write to the memory 3. The processor 2 can also comprise an output interface via which data and/or commands are output by the processor 2 and an input interface via which data and/or commands are input to the processor 2. The apparatus can be coupled to or comprise one or more other components 5 (not least for example one or more of: a data communication interface, input/output user interface elements and/or other modules/devices/components for inputting and outputting data/commands).

The memory 3 stores instructions such as a computer program 4 comprising such instructions (e.g. computer program instructions/code) that controls the operation of the apparatus 1 when loaded into the processor 2. The instructions of the computer program 4, provide the logic and routines that enables the apparatus to perform the methods, processes and procedures described in the present disclosure (not least such as those illustrated in Fig. 1 and discussed above). The processor 2, by reading the memory 3, is able to load and execute the computer program 4.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 3 is illustrated as a single component/circuitry it can be implemented as one or more separate components/circuitry some or all of which can be integrated/removable and/or can provide permanent/semi-permanent/ dynamic/cached storage.

Although the processor 2 is illustrated as a single component/circuitry it can be implemented as one or more separate components/circuitry some or all of which can be integrated/removable. The processor 2 can be a single core or multi-core processor.

The apparatus can include one or more components for effecting the methods, processes and procedures described in the present disclosure (not least such as those illustrated in Fig. 2 as well as those discussed above). It is contemplated that the functions of these components can be combined in one or more components or performed by other components of equivalent functionality. The description of a function should additionally be considered to also disclose any means suitable for performing that function.

Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be a server device, a client device, a mobile cellular telephone, an in-vehicle integrated device, a wireless communications device, a hand-portable electronic device etc. The apparatus can be embodied by a computing device, not least such as those mentioned above. However, in some examples, the apparatus can be embodied as a chip, chip set, circuitry or module, i.e. for use in any of the foregoing.

In some examples, the apparatus comprises:
at least one processor 12; and
at least one memory 13 storing instructions that, when executed by the at least one processor 12, cause the apparatus to perform
obtaining map data of a digital map, wherein the map data comprises:
   segment data indicative of one or more segments of one or more linear map features of the digital map, and
   segment attribute data indicative of:
      one or more attributes associated with each segment, wherein the one or more attributes are selected from a first set of attributes, and
      at least one position of each attribute within its respective segment, wherein the at least one position of each attribute within its respective segment is defined via linear referencing, and;
obtaining sectioning configuration data for configuring sectioning of the map data, wherein the sectioning configuration data comprises an indication of a second set of attributes, wherein the second set of attributes is a subset of the first set of attributes, and wherein the sectioning configuration data enables sectioning of the map data to be performed based at least in part on the second set of attributes; and
generating sectioned map data, wherein the generation of the sectioned map data comprises sectioning the map data in accordance with the sectioning configuration data.

Fig. 17 illustrates a computer program 4 which may be conveyed via a delivery mechanism 7. The delivery mechanism 7 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 4. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus, cause the apparatus to perform:
obtaining map data of a digital map, wherein the map data comprises:
   segment data indicative of one or more segments of one or more linear map features of the digital map, and
   segment attribute data indicative of:
      one or more attributes associated with each segment, wherein the one or more attributes are selected from a first set of attributes, and
      at least one position of each attribute within its respective segment, wherein the at least one position of each attribute within its respective segment is defined via linear referencing, and;
obtaining sectioning configuration data for configuring sectioning of the map data, wherein the sectioning configuration data comprises an indication of a second set of attributes, wherein the second set of attributes is a subset of the first set of attributes, and wherein the sectioning configuration data enables sectioning of the map data to be performed based at least in part on the second set of attributes; and
generating sectioned map data, wherein the generation of the sectioned map data comprises sectioning the map data in accordance with the sectioning configuration data.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of transmitting information should also be considered to disclose enabling, and/or causing, and/or controlling transmitting information. Similarly, for example, a description of an apparatus transmitting information should also be considered to disclose at least one means or controller of the apparatus enabling, and/or causing, and/or controlling the apparatus to transmit the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter or attribute, or value of a parameter or attribute, should be understood to refer to "data indicative of", "data defining" or "data representative of" the relevant parameter/parameter value if not explicitly stated (unless the context demands otherwise). The data may be in any way indicative of the relevant parameter/attribute and/or its value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A computer-implemented method of generating sectioned map data, the method comprising an apparatus performing the following:
obtaining map data of a digital map, wherein the map data comprises:
segment data indicative of one or more segments of one or more linear map features of the digital map, and
segment attribute data indicative of:
one or more attributes associated with each segment, wherein the one or more attributes are selected from a first set of attributes, and
at least one position of each attribute within its respective segment, wherein the at least one position of each attribute within its respective segment is defined via linear referencing, and;
obtaining sectioning configuration data for configuring sectioning of the map data, wherein the sectioning configuration data comprises an indication of a second set of attributes, wherein the second set of attributes is a subset of the first set of attributes, and wherein the sectioning configuration data enables sectioning of the map data to be performed based at least in part on the second set of attributes; and
generating sectioned map data, wherein the generation of the sectioned map data comprises sectioning the map data in accordance with the sectioning configuration data.

2. The method of any previous claim, wherein the least one position of each attribute within its respective segment, comprises at least one of the following:
an indication of a position along the respective segment where the attribute is located;
an indication of a position along the respective segment where the attribute starts to apply;
an indication of a position along the respective segment where the attribute ceases to apply;
an indication of a position along the respective segment where the attribute changes; and
an indication of a portion of the respective segment where the attribute applies.

3. The method of any previous claim, wherein each attribute of the second set of attributes is associated with an attribute category, and wherein sectioning the map data in accordance with the sectioning configuration data comprises sectioning at least one segment of the map data to generate two or more segments of the sectioned map data wherein each of the two or more segments of the sectioned map data is associated with a single attribute per attribute category over its length.

4. The method of any previous claim, wherein sectioning the map data in accordance with the sectioning configuration data comprises:
determining at least one segment that is associated with at least one attribute of the second set of attributes;
determining at least one position, within the determined at least one segment, of the at least one attribute of the second set of attributes; and
sectioning the map data based at least in part on:
the determined at least one segment, and
the determined at least one position.

5. The method of claim 3 or 4, wherein each segment is defined in the segment data of the map data by an arc between two nodes, and wherein sectioning the map data comprises at least one of the following:
splitting, at at least one split point, at least one arc of the determined at least one segment to form at least two split arcs, wherein the at least one position of the at least one split point is based at least in part on the determined at least one position, and
inserting, at at least one insertion point, at least one node between two nodes of the determined at least one segment, wherein the at least one position of the at least one insertion point is based at least in part on the determined at least one position;
and optionally further comprising at least one of the following:
assigning, to at least one of the split arcs, the respective at least one attribute of the second set of attributes, and
assigning, to the at least one inserted node, the respective at least one attribute of the second set of attributes.

6. The method of any previous claim, further comprising:
determining whether a position of at least one attribute of the second set of attributes is within a threshold separation distance of a position of at least one other attribute of the second set of attributes; and
performing a normalisation procedure based at least in part on the determination.

7. The method of claim 6, wherein the normalisation procedure comprises at least one of:
generating an adjusted position of a position of one or more of the at least one attribute and the at least one other attribute,
assigning an adjusted position to one or more of the at least one attribute and the at least one other attribute,
assigning the at least one attribute an adjusted position that correspond to the position of the at least one other attribute, and
assigning an adjusted position to each of the at least one attribute and the at least one other attribute, wherein the adjusted position is based at least in part on the position of the at least one attribute and the position of the at least one other attribute;
and optionally further comprising at least one of the following:
sectioning the map data is based at least in part on the adjusted position,
a segment of the map data is split at a split point, wherein the position of the split point is based at least in part on the adjusted position, and
a node is inserted between two nodes of a segment of the map data at an insertion point, wherein a position of the insertion point is based at least in part on the adjusted position.

8. The method of any previous claim, further comprising:
determining, based at least in part on the map data and the sectioning configuration data, a third set of attributes, wherein attributes of the third set of attributes are:
in the first set of attributes, and
not in the second sets of attributes; and
generating segment attribute data for the sectioned map data, wherein the segment attribute data for the sectioned map data:
is indicative of attributes of the third set of attributes that are associated with one or more segments of the sectioned map data, and
at least one position of each attribute of the third set of attributes within its respective segment of the sectioned map data, wherein the at least one position of each attribute within its respective segment is defined via linear referencing;
and optionally further comprising determining the at least one position of each attribute within its respective segment of the sectioned map data based at least in part on the at least one position of each attribute of the third set of attributes within its respective segment of the segment data of the map data.

9. The method of claim 8, wherein the segment attribute data of the map data is indicative of at least one variable value of at least one attribute whose value varies based at least in part on a position within its associated segment of the segment data of the map data, and wherein the method further comprises:
determining, at least one adjusted variable value of the at least one attribute based at least in part on a position within its associated segment of the sectioned map data.

10. The method of any previous claim, wherein:
the map data of a digital map further comprises segment relation data indicative of at least one relation between:
one of the one or more segments of the segment data, and
at least one other of the segments of the segment data;
the sectioned map data comprises segment relation data indicative of:
at least one relation between one of the one or more segments of the sectioned map data, and
at least one other of the segments of the sectioned map data; and
the segment relation data of the sectioned map data is based at least in part on the segment relation data of the map data.

11. The method of any previous claim, wherein at least one segment of the map data has at least one relation with at least one other segment of the map data, wherein sectioning the map data comprises splitting the at least one segment into a set of two or more split segments, and wherein the method further comprises at least one of:
assigning the at least one relation to a first subset of the set of split segments;
assigning a null relation to a second subset of the set of split segments, wherein the second subset is different to the first subset, and
determining a relation to assign to at least one split segment of the set of split segments based at least in part on the at least one relation and a condition associated with the at least one relation; and/or
wherein the map data of a digital map further comprises segment identification data indicative of an identifier for each of the one or more segments of the segment data, and wherein the sectioned map data comprises segment identification data indicative of an identifier for each of the one or more segments of the sectioned map data, and wherein the segment identification data of the sectioned map data is based at least in part on the segment identification data of the map data.

12. The method of any previous claim, wherein each segment and/or each node of the map data has an identifier, and wherein the method further comprises at least one of:
for each segment of the map data that has been split in the sectioned map data, generating and assigning an identifier for each split segment;
for each segment of the sectioned map data that has not been split, using the same identifier as used in the map data;
for each node of the sectioned map data that corresponds to a node of the map data, using the same identifier as used in the map data; and
for each node of the sectioned map data that has been inserted between two nodes of the map data, generating and assigning an identifier for each inserted node.

13. The method of any previous claim, wherein sectioning the map data comprises splitting a first segment of the map data into two or more split segments, wherein the first segment of the map data has a first identifier, wherein a second identifier for each split segment is generated based at least in part on the first identifier;
and optionally further comprising generating a mapping between:
the first identifier, and
the identifier for each split segment.

14. An apparatus comprising means for performing the method of any of the previous claims.

15. A computer program comprising instructions which, when the program is executed by a computer, cause the computer to carry out the method of any of claims 1 to 13.
